# EUROPÄISCHE PATENTSCHRIFT

(11) **EP 1 929 675 B1**
(45) Veröffentlichungstag und Bekanntmachung des Hinweises auf die Patenterteilung: **11.07.2018**
(21) Anmeldenummer: 06778226.8
(22) Anmeldetag: 10.08.2006
(51) Int. Cl.: H04H 20/18, H04H 20/22, H04H 20/26

(54) **ÜBERTRAGUNG EINES DATENSTROMS MITTELS OFDM-SYMBOLEN AUF ZWEI TRÄGERFREQUENZEN MIT ÜBERLAPPENDEN SUPERRAHMEN VON KOMMENSURABELER ZEITDAUER**
TRANSMISSION OF A DATA STREAM USING OFDM SYMBOLS AT TWO CARRIER FREQUENCIES WITH OVERLAPPING CONTROLLING DATA TRANSMISSION FRAMES OF A COMMENSURABLE DURATION
TRANSMISSION D'UN FLUX DE DONNEES AU MOYEN DE SYMBOLES OFDM DANS DEUX FREQUENCES PORTEUSES AVEC CHEVAUCHEMENT DE SUPERTRAMES DE DUREE COMMENSURABLE

(30) Priorität: 20.09.2005 DE 102005044970
(43) Veröffentlichungstag der Anmeldung: 11.06.2008
(73) Patentinhaber: ROBERT BOSCH GMBH, 70442 Stuttgart (DE)
(72) Erfinder: HOFMANN, Frank, 31139 Hildesheim (DE)
(86) Internationale Anmeldenummer: PCT/EP2006/065232
(87) Internationale Veröffentlichungsnummer: WO 2007/033866

(56) Entgegenhaltungen:
- EP-A- 0 994 586
- EP-A- 1 050 984
- EP-A- 1 067 719
- DE-A1- 10 060 569
- US-A1- 2005 008 034

## Beschreibung

Die Erfindung betrifft ein Verfahren zum Übertragen von Informationen in einem digitalen Übertragungssystem, insbesondere in einem DRM-Übertragungssystem (DRM: Digital Radio Mondiale). Die Erfindung betrifft weiterhin ein Verfahren zum Wechseln des Empfangs zwischen zwei Empfangssignalen auf verschiedenen Trägerfrequenzen in einem digitalen Übertragungssystem. Die Erfindung betrifft weiterhin eine Empfangseinrichtung in einem digitalen Übertragungssystem sowie eine Sendeeinrichtung zum Übertragen von Informationen in einem digitalen Übertragungssystem.

Die Offenlegungsschrift US 2005/008034 A1 zeigt ein Verfahren zum Übertragen von Radiosignalen.

Das digitale Übertragungssystem Digital Radio Mondiale (DRM-System) wurde für die Frequenzbänder unterhalb 30 MHz von einem weltweiten Konsortium entwickelt und im Jahr 2001 standardisiert (ETSI TS 101980). Das DRM-System wurde von der Übertragungstechnik und den Übertragungsparametern speziell für die Lang-, Mittel- und Kurzwelle ausgelegt. Inzwischen gibt es Bestrebungen für eine Erweiterung des Systems auf das VHF-Band. Da sich die Ausbreitungseigenschaften in diesem erweiterten Frequenzband aber wesentlich von denen der herkömmlichen Frequenzbänder unterscheiden, muss für eine effektive Übertragung das System erweitert werden.

Ein wichtiges Merkmal beim DRM-Übertragungssystem ist die Alternativfrequenz-Umschaltung. Unter Alternativfrequenz-Umschaltung versteht man das Umschalten von einem Sendesignal auf einer ersten Trägerfrequenz auf ein Sendesignal auf einer zweiten Trägerfrequenz. Ein solches Umschalten wird z.B. durchgeführt, wenn sich auf der ersten Trägerfrequenz die Empfangsqualität verschlechtert oder niedrig ist und ein Programm gleichen Informationsgehalts auf einer weiteren Trägerfrequenz gesendet wird. Eine solche Vorgehensweise ist auch beim herkömmlichen analogen Rundfunk als FM-RDS bekannt.

Da es sich bei einem DRM-System üblicherweise um ein Ein-Empfänger-System handelt, das zu einem Zeitpunkt nur ein Sendesignal auf einer Trägerfrequenz empfangen und dekodieren kann, besteht ein Problem darin, so zwischen Trägerfrequenzen umzuschalten, dass z.B. beim Radioempfang keine hörbare Störung des Ausgabesignals auftritt, bzw., dass der übertragene Datenstrom im wesentlichen lückenlos empfangen wird.

Das DRM-System nutzt als Übertragungsverfahren OFDM (Orthogonal Frequency Division Multiplexing), welches aus dem Stand der Technik bekannt ist. Die Übertragung der Daten erfolgt anhand von nacheinander gesendeten OFDM-Symbolen. Bei der Anpassung des DRM-Systems auf erweiterte Trägerfrequenzen ist es sinnvoll, die OFDM-Symboldauer aufgrund anderer Kanaleigenschaften unterschiedlich zu wählen. Für die Erweiterung des DRM-Systems auf Trägerfrequenzen in einem weiteren Übertragungsband sind daher also neue OFDM-Parameter festzulegen. Bei höheren Trägerfrequenzen, wie z.B. im VHF-Band, ist z.B. die Symboldauer wesentlich kürzer zu wählen. Folglich wird eine größere Anzahl von OFDM-Symbolen in einer bestimmten Zeitdauer gesendet.

Um die OFDM-Symbole dekodieren zu können, ist beim Wechsel auf eine solche weitere Trägerfrequenz eine erneute Kanalschätzung notwendig, da die Kanalschätzung auf der Trägerfrequenz des Sendesignals nicht weitergeführt werden kann und noch keine aktuelle Kanalschätzung für das Sendesignal auf der weiteren Trägerfrequenz, auf das gewechselt wird, vorliegt.

Es ist daher Aufgabe der Erfindung, ein Verfahren zum Übertragen von Informationen in einem digitalen Übertragungssystem zur Verfügung zu stellen, das es ermöglicht, empfängerseitig eine nicht wahrnehmbare bzw. lückenlose Umschaltung zwischen zwei Trägerfrequenzen durchzuführen. Es ist weiterhin Aufgabe der vorliegenden Erfindung, ein Verfahren zum Wechseln des Empfangens zwischen zwei Empfangssignalen in einem digitalen Übertragungssystem zur Verfügung zu stellen. Es ist weiterhin Aufgabe der vorliegenden Erfindung, eine Empfangseinrichtung für ein digitales Übertragungssystem zur Verfügung zu stellen, mit der ein Wechsel des Empfangens zwischen Sendesignalen durchgeführt werden kann. Es ist weiterhin Aufgabe der vorliegenden Erfindung, eine Sendeeinrichtung zur Verfügung zu stellen, die es ermöglicht, empfängerseitig eine möglichst nicht wahrnehmbare bzw. lückenlose Umschaltung beim Wechsel zwischen dem Empfangen von zwei Sendesignalen auf verschiedenen Trägerfrequenzen durchzuführen.

Diese Aufgaben werden durch das Verfahren zum Übertragen von Informationen in einem digitalen Übertragungssystem nach Anspruch 1, das Verfahren zum Wechsel des Empfangens zwischen zwei Empfangssignalen nach Anspruch 6, die Empfangseinrichtung für ein digitales Übertragungssystem nach Anspruch 9 sowie die Sendeeinrichtung zum Übertragen von Informationen in einem digitalen Übertragungssystem nach Anspruch 12 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Übertragen eines Datenstromes in einem digitalen Übertragungssystem vorgesehen. Der Datenstrom wird in einem Sendesignal mit aufeinander folgenden OFDM-Symbolen übertragen, wobei eine Anzahl von OFDM-Symbolen in einem Übertragungsrahmen zusammengefasst sind. Eine Anzahl von Übertragungsrahmen werden in einem Übertragungs-Superrahmen übertragen, wobei jeder Übertragungs-Superrahmen einen Informationsblock mit einem oder mehreren OFDM-Symbolen in einer festgelegten Position des jeweiligen Übertragungs-Superrahmens aufweist, wobei ein erstes Sendesignal mit einem ersten Datenstrom in einem ersten Trägerfrequenzbereich und ein zweites Sendesignal mit einem zweiten Datenstrom mit gleichem Informationsgehalt wie der erste Datenstrom in einem zweiten Trägerfrequenzbereich übertragen werden. Die Zeitdauer der Übertragungs-Superrahmen des ersten Sendesignals ist ein ganzzahliges Vielfaches der Zeitdauer der Übertragungs-Superrahmen des zweiten Sendesignals.

Das erfindungsgemäße Verfahren ermöglicht es, dass beim Wechsel zwischen dem Empfangen von Sendesignalen auf verschiedenen Trägerfrequenzen möglichst keine Unterbrechung im übertragenen Datenstrom auftritt.

Vorzugsweise wird der Informationsblock der Übertragungs-Superrahmen des ersten Sendesignals zumindest teilweise zeitlich überlappend mit einem der Informationsblöcke der Übertragungs-Superrahmen des zweiten Sendesignals gesendet. Dies ermöglicht ein Umschalten des Empfangens zwischen den Sendesignalen während des Informationsblockes.

Gemäß einer bevorzugten Ausführungsform wird mindestens einem der Informationsblöcke der Übertragungs-Superrahmen des zweiten Sendesignals eine Wechselinformation hinzugefügt, die angibt, bei welchen Informationsblöcken des zweiten Sendesignals ein Informationsblock des ersten Sendesignals zeitlich überlappend gesendet wird.

Gemäß einer bevorzugten Ausführungsform können zur Unterstützung einer Kanalschätzung in den ersten und in den zweiten Übertragungs-Superrahmen Pilotsignale vorgesehen werden, wobei die zweite Trägerfrequenz höher ist als die erste Trägerfrequenz, wobei zur Durchführung der Kanalschätzung bestimmte Dichten der Pilotsignale in den Sendesignalen in den Übertragungs-Superrahmen abhängig von Kanaleigenschaften der Sendesignale benötigt werden, wobei die Dichte der Pilotsignale des zweiten Sendesignals gegenüber der bestimmten Dichte der Pilotsignale in den Übertragungs-Superrahmen des zweiten Sendesignals erhöht gewählt wird.

Gemäß einem weiteren Aspekt der vorliegenden Erfindung ist ein Verfahren zum Wechseln des Empfangens zwischen zwei Empfangssignalen vorgesehen, wobei die Empfangssignale OFDM-Symbole umfassen, wobei eine Anzahl von OFDM-Symbolen in einem Übertragungsrahmen zusammengefasst sind, wobei eine Anzahl von Übertragungsrahmen in einem Übertragungs-Superrahmen übertragen werden. Jeder Übertragungs-Superrahmen weist einen Informationsblock mit einem oder mehreren OFDM-Symbolen an einer festgelegten Position des Übertragungs-Superrahmen auf, wobei zwischen dem Empfangen eines ersten der Empfangssignale und des Empfangens eines zweiten der Empfangssignale während eines Zeitbereichs gewechselt wird, in dem sowohl in dem ersten als auch in dem zweiten Empfangssignal der Informationsblock übertragen wird.

Gemäß einem weiteren Aspekt der vorliegenden Erfmdung ist eine Empfangseinrichtung in einem digitalen Übertragungssystem zum Empfangen eines Empfangssignals vorgesehen. Die Empfangseinrichtung umfasst eine Empfangseinheit zum Empfangen wahlweise eines ersten Empfangssignals in einem ersten Trägerfrequenzbereich und eines zweiten Empfangssignals in einem zweiten Trägerfrequenzbereich. Die Empfangssignale umfassen OFDM-Symbole, wobei jeweils eine Anzahl von OFDM-Symbolen in einem Übertragungsrahmen zusammengefasst sind, wobei eine Anzahl von Übertragungsrahmen in einem Übertragungs-Superrahmen enthalten sind. Jeder Übertragungs-Superrahmen weist einen Informationsblock mit einem oder mehreren OFDM-Symbolen an einer festgelegten Position des Übertragungs-Superrahmen auf. Die Empfangseinrichtung umfasst weiterhin eine Wechseleinrichtung zum Durchführen eines Wechselns zwischen dem Empfangen des ersten und des zweiten Empfangssignals, wobei die Wechseleinrichtung gestaltet ist, um den Wechsel zwischen den Empfangssignalen während eines Zeitbereichs durchzuführen, wobei der Zeitbereich dadurch definiert ist, dass sowohl in dem ersten als auch in dem zweiten Empfangssignal der Informationsblock übertragen wird.

Vorzugsweise ist eine Detektionseinheit zum Auswerten einer in dem Informationsblock des zweiten Empfangssignals enthaltenen Wechselinformation vorgesehen, wobei die Wechselinformation zumindest angibt, bei welchen Informationsblöcken des zweiten Empfangssignals der Informationsblock des ersten Empfangssignals zumindest teilweise überlappend gesendet wird. Die Detektionseinheit steuert die Wechseleinrichtung an, um einen Wechsel zwischen den Empfangssignalen durchzuführen, während in beiden Empfangssignalen der Informationsblock übertragen wird.

Gemäß einer weiteren Ausführungsform ist eine Kanalschätzeinheit vorgesehen, um eine Kanalschätzung zumindest mit Hilfe von in dem ersten und in dem zweiten Empfangssignal vorgesehenen Informationsblöcken enthaltenen Pilotsignalen durchzuführen.

Gemäß einem weiteren Aspekt der vorliegenden Erfmdung ist eine Sendeeinrichtung zum Übertragen eines Datenstromes in einem digitalen Übertragungssystem vorgesehen. Der Datenstrom in einem Sendesignal wird mit aufeinanderfolgenden OFDM-Symbolen übertragen, wobei jeweils eine Anzahl von OFDM-Symbolen in einem Übertragungsrahmen zusammengefasst sind, wobei eine Anzahl von Übertragungsrahmen in einem Übertragungs-Superrahmen zusammengefasst sind, wobei der Übertragungs-Superrahmen einen Informationsblock mit einem oder mehreren OFDM-Symbolen an einer festgelegten Position des Übertragungs-Superrahmen aufweist. Die Sendeeinrichtug umfasst eine erste Sendeeinheit zum Übertragen eines ersten Datenstromes in einem ersten Trägerfrequenzbereich und eine zweite Sendeeinheit zum Übertragen eines zweiten Datenstromes in einem zweiten Trägerfrequenzbereich. Die erste und die zweite Sendeeinheit sind so aufeinander abgestimmt, dass die Zeitdauern der Übertragungs-Superrahmen des ersten Sendesignals auf ein ganzzahliges Vielfaches der Zeitdauer des Übertragungs-Superrahmens des zweiten Sendesignals eingestellt sind. Weiterhin ist eine Synchronisationseinheit vorgesehen, um die Übertragungs-Superrahmen des ersten Sendesignals und die Übertragungs-Superrahmen des zweiten Sendesignals so aufeinander anzugleichen, dass sich die Informationsblöcke der Übertragungs-Superrahmen des ersten Sendesignals und mindestens einer der Informationsblöcke der Übertragungs-Superrahmen des zweiten Sendesignals zeitlich überlappen.

Vorzugsweise ist eine Modifizierungseinheit vorgesehen, um den Informationsblöcken in dem zweiten Sendesignal eine Wechselinformation hinzuzufügen, die angibt, bei welchen Informationsblöcken des zweiten Sendesignals der Informationsblock des ersten Übertragungs-Superrahmens zeitgleich gesendet wird.

Gemäß einer bevorzugten Ausführungsform der Erfindung ist eine Pilotsignaleinheit vorgesehen, um Pilotsignale zur Durchführung einer Kanalschätzung dem ersten und dem zweiten Sendesignal hinzuzufügen, wobei die Dichte der Pilotsignale in den Informationsblöcken des zweiten Sendesignals gegenüber der Dichte der Pilotsignale, die mindestens benötigt wird, um eine Kanalschätzung durchführen zu können, in den Informationsblöcken des ersten Sendesignals erhöht ist.

Bevorzugte Ausführungsformen der Erfindung werden nachfolgend anhand der beigefügten Zeichnungen näher erläutert. Es zeigen:
Figur 1 eine schematische Darstellung eines DRM-Übertragungssystems mit einer Sende- und Empfangseinrichtung gemäß einer bevorzugtem Ausführungsform der Erfindung;
Figuren 2A und 2B schematische Darstellungen von Rahmenstrukturen von DRM-Sendesignalen in verschiedenen Trägerfrequenzbereichen;
Figur 3 die Verteilung von Pilotsignalen in einem OFDM-Sendesignal; und
Figuren 4A und 4B die Verteilung von Pilotsignalen in den Informationsblöcken der Übertragungs-Superrahmen in den Sendesignalen bei verschiedenen Trägerfrequenzen.

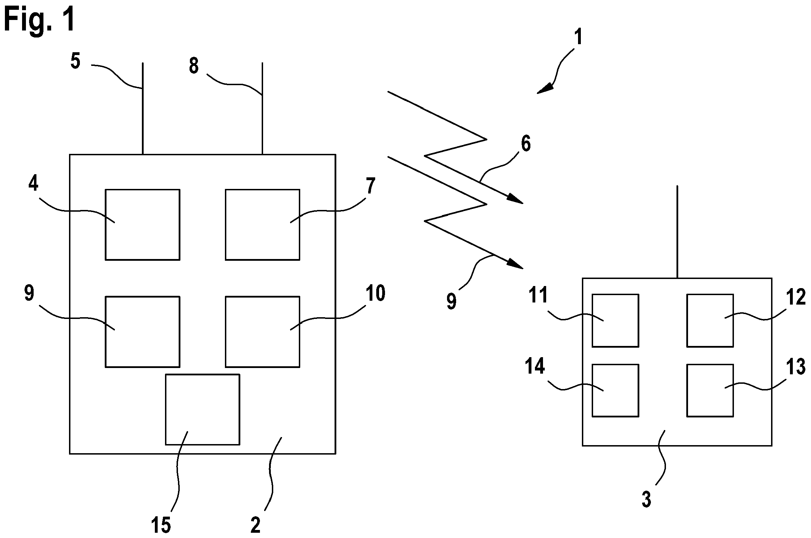

In Figur 1 ist ein DRM-Übertragungssystem 1 mit einer Sendeeinrichtung 2 und einer Empfangseinrichtung 3 dargestellt. Die Sendeeinrichtung weist eine erste Sendeeinheit 4 auf, mit der über eine erste Antenne 5 ein erstes Sendesignal 6 in einem ersten Trägerfrequenzbereich ausgesendet wird. Weiterhin umfasst die Sendeeinrichtung 2 eine zweite Sendeeinheit 7, mit der über eine zweite Antenne 8 ein zweites Sendesignal 9 in einem zweiten Trägerfrequenzbereich ausgesendet wird.
Der erste Trägerfrequenzbereich befindet sich beispielsweise in einem der Frequenzbereiche für Lang-, Mittel- und/oder Kurzwelle. Der zweite Trägerfrequenzbereich befindet sich beispielsweise in dem VHF-Band. Die Sendeeinheiten 4, 7 können gemeinsam aufgebaut sein, aber auch örtlich voneinander getrennt vorliegen.

Die Empfangseinrichtung 3 ist so gestaltet, um entweder das erste oder das zweite Sendesignal 6, 9 in dem jeweiligen Trägerfrequenzbereich zu empfangen. Die Empfangseinrichtung 3 ist in Form einer sogenannten Ein-Empfänger-Empfangseinrichtung ausgebildet, d.h. die Empfangseinrichtung 3 weist lediglich eine Empfangseinheit 11 auf, um das erste oder das zweite Sendesignal 6, 9 zu empfangen, indem die Empfangseinheit 11 auf die Trägerfrequenz des jeweiligen Sendesignals eingestellt wird.

Ein DRM-Übertragungssystem nützt als Übertragungsverfahren OFDM (Orthogonal Frequency Division Multiplexing). Bei OFDM wird eine Information als Datenstrom in verschiedenen aufeinanderfolgenden Symbolen, sogenannte OFDM-Symbolen, in dem jeweiligen Sendesignal auf einer Anzahl von Unterträgerfrequenzen übertragen, wobei das Sendesignal eine Information in einem OFDM-Symbol durch eine Phasenlage und einer Amplitudengröße kodiert. Die Unterträgerfrequenzen sind abhängig von der Trägerfrequenz mit bestimmten Frequenzabständen eingestellt. Beim DRM-Übertragungssystem werden die OFDM-Symbole kohärent übertragen, so dass in der Empfangseinrichtung 3 eine Kanalschätzung durchgeführt werden muss, bei der die Unterträgerfrequenzen der einzelnen Symbole ermittelt werden. Dies erfolgt üblicherweise, indem in das OFDM-Signal Pilotsignale eingebettet werden, die eine der Sendeeinrichtung und Empfangseinrichtung vorbestimmte Phase und Amplitude aufweisen, die durch die Empfangseinrichtung detektiert werden können.

Mehrere OFDM-Symbole werden zu einem Übertragungsrahmen zusammengefasst. Entsprechend der vier verschiedenen im Standard beschriebenen Übertragungsmodi A, B, C und D enthält der Übertragungsrahmen 15, 15, 20 bzw. 24 OFDM-Symbole, so dass sich jeweils eine Rahmendauer von 400 ms ergibt.

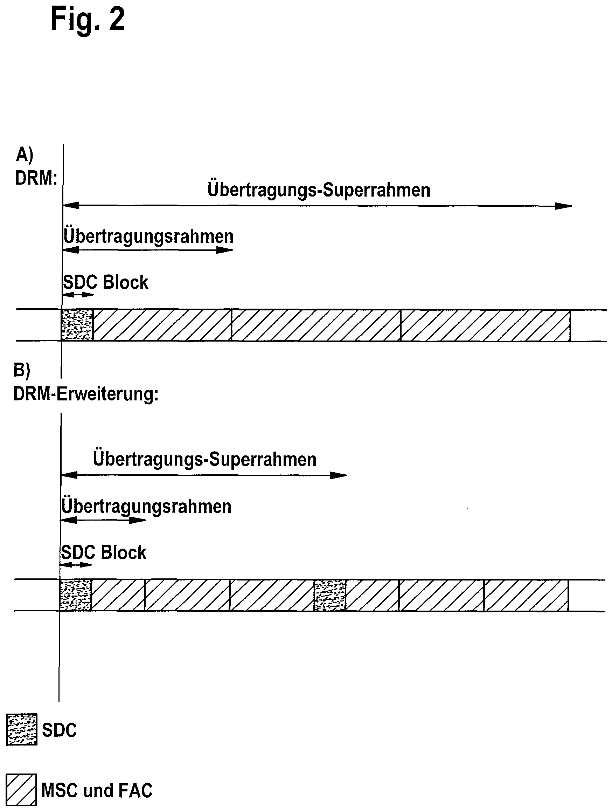

In Figur 2A ist als Beispiel die Rahmenstruktur des ersten Sendesignals 6 dargestellt. Drei Übertragungsrahmen werden zu einem Übertragungs-Superrahmen mit einer Dauer von 1200 ms zusammengefasst. Die ersten zwei OFDM-Symbole im Übertragungsmodus A und B bzw. die ersten drei OFDM-Symbole im Übertragungsmodus C und D in einem Übertragungs-Superrahmen bilden den SDC-Block. Jeder Übertragungs-Superrahmen weist einen SDC-Block (SDC: Service Description Channel) als Informationsblock auf, der Informationen über die Multiplex-Struktur des Sendesignals und weitere Programminformationen, wie z.B. den Programmnamen, enthält. Die Empfangseinrichtung 3 dekodiert den SDC-Block mit den notwendigen Informationen zur Wiedergabe des Audioprogramms. Der SDC-Block wird jedem Übertragungs-Superrahmen hinzugefügt. Nach dem Übertragen des SDC-Blockes folgt ein MSC-Block (MSC: Main Service Channel), der die eigentlichen Daten der Programme enthält. Der FAC-Block (FAC: Fast Access Channel) enthält Informationen zum schnellen Finden von Programmen beim Tune-Vorgang wie die Service ID.

Der SDC-Block ist in diesem Ausführungsbeispiel als Informationsblock zu Beginn eines jeden Übertragungs-Superrahmens vorgesehen. Die darin enthaltenen Daten entsprechen sich, da in einem Sendesignal üblicherweise kontinuierlich die gleichen Sendungsprogramme übertragen werden. Daher kann die Empfangseinrichtung die Dekodierung des SDC-Blocks teilweise aussetzen und während der Zeitdauer des SDC-Blocks zum Empfangen eines weiteren Sendesignals umschalten. Z.B. kann die Empfangseinrichtung dabei die Feldstärke des zweiten Sendesignals auf der alternativen zweiten Trägerfrequenz ermitteln und somit auf die Signalqualität des zweiten Sendesignals schließen. Enthält das zweite Sendesignal 6 die gleichen Daten im SDC-Block wie das erste Sendesignal auf der Empfangsfrequenz und beide Sendeeinheiten 4,7 sind mit Hilfe einer Synchronisationseinheit 15 zueinander synchronisiert, so kann die Empfangseinrichtung 3 über Korrelationsverfahren feststellen, dass das zweite Sendesignal 9 auf der zweiten Trägerfrequenz das gleiche Programm enthält, ohne den SDC-Block des zweiten Sendesignals 9 zu dekodieren.

Beim Bereitstellen eines DRM-Sendesignals in einem alternativen Frequenzband, wie z.B. dem VHF-Band, muss das DRM-System auf eine entsprechende Trägerfrequenz eingestellt werden. D.h., die OFDM-Symboldauer wird aufgrund anderer Kanaleigenschaften verschieden von den bisher üblichen OFDM-Symboldauern gewählt. Für eine Erweiterung des DRM-Systems auf ein weiteres Trägerfrequenzband werden daher neue OFDM-Parameter festgelegt. Bei höheren Trägerfrequenzen wird beispielsweise die Symboldauer wesentlich kürzer gewählt. Folglich wird eine größere Anzahl an OFDM-Symbolen einem Übertragungs-Superrahmen entsprechen. Dies ist in Figur 2B dargestellt, wobei die Zeitdauer für die Übertragung des Übertragungs-Superrahmens bei einem Sendesignal in dem erweiterten Frequenzband nur noch der Hälfte der Zeitdauer des Übertragungs-Superrahmens des herkömmlichen Frequenzbandes (Fig. 2A) entspricht.

Die Sendeeinrichtung 2 weist eine Synchronisationseinheit 9 auf, die das erste und das zweite Sendesignal 6, 9 zueinander so synchronisiert, dass mindestens einer der SDC-Blöcke (Informationsblock) des zweiten Sendesignals synchron, d.h. zeitgleich bzw. zeitlich überlappend zu dem SDC-Block des ersten Sendesignals 6 gesendet wird.

Dazu wird die Dauer des Übertragungs-Superrahmens kürzer gewählt, um im Empfänger zügiger eine Audiowiedergabe zu erreichen. Vorteile ergeben sich, wenn hierzu mehrere Kriterien eingehalten werden. Die Länge des Übertragungs-Superrahmens sollte vorzugsweise um den Faktor 1/n (n: ganze Zahl) festgelegt werden. Für die Erweiterung des DRM-Systems bedeutet dies eine Dauer von 600 ms, 400 ms, 300 ms, entsprechend n = 2, 3, 4 usw. Daraus ergibt sich der Vorteil, dass an den Stellen, an denen das erste Sendesignal 6 einen SDC-Block aufweist, auch ein SDC-Block des zweiten Sendesignals 9 gesendet wird. Dies ist in den Figuren 2A und 2B durch die übereinander dargestellten Übertragungs-Superrahmen des ersten Sendesignals 6 und des zweiten Sendesignals 9 anschaulich dargestellt, wobei der SDC-Block eines Übertragungs-Superrahmens des ersten Sendesignals 6 synchron zu einem der SDC-Blöcke eines der Übertragungs-Superrahmen des zweiten Sendesignals 9 gesendet wird. Eine Umschaltung der Empfangseinrichtung 3 zwischen dem ersten und dem zweiten Sendesignal 6, 9 zum Nutzen einer alternativen Trägerfrequenz wird damit erleichtert. Zusätzlich sollte die Dauer der Übertragungsrahmen verkürzt werden. Die Dauer sollte vorzugsweise 1/m (m: ganze Zahl) bezüglich des Übertragungs-Superrahmens betragen.

Weiterhin ist es sinnvoll, eine Zählerinformation oder eine sonstige Wechselinformation für die Übertragungs-Superrahmen einzuführen, damit die Empfangseinrichtung beim Umschalten zwischen dem zweiten Sendesignal 9 und dem ersten Sendesignal 6 erkennt, bei welchen SDC-Blöcken des zweiten Sendesignals gleichzeitig ein SDC-Block des ersten Sendesignals 6 gesendet wird. Bei dem in den Figuren 2A und 2B dargestellten Ausführungsbeispiel wäre eine Umschaltung bei jedem zweiten SDC-Block, d.h. bei jedem zweiten Übertragungs-Superrahmen des zweiten Sendesignals, möglich.

Die Wechselinformation, d.h. der Zähler für die SDC-Blöcke, kann beispielsweise durch eine in der Sendeeinrichtung 2 vorgesehenen Modifizierungseinheit 10 dem SDC-Block des zweiten Sendesignals 9 hinzugefügt werden. Die Wechselinformation gibt an, zu welchen SDC-Blöcken des zweiten Sendesignals der SDC-Block des ersten Sendesignals zumindest teilweise überlappend gesendet wird, wobei die Detektionseinheit 13 die Wechseleinrichtung 12 ansteuert, so dass ein Wechsel zwischen den Sendesignalen durchgeführt wird, wenn in beiden Sendesignalen der Informationsblock gesendet wird. Auf diese Weise kann vermieden werden, dass ein Wechsel zwischen dem Sendesignal zu einem Informationsverlust führt, der im Fall, dass ein Rundfunksignal empfangen werden soll, wahrnehmbar sein kann.

Die Empfangseinrichtung 3 weist weiterhin eine Wechseleinrichtung 12 auf, die die Empfangseinheit 11 anweist, von dem Empfangen des ersten Sendesignals 6 zu dem Empfangen des zweiten Sendesignals 9 zu wechseln, wobei der Wechsel zwischen dem Empfang der Sendesignale 6, 9 während eines Zeitbereichs durchgeführt wird, der dadurch definiert ist, das sowohl in dem ersten als auch in dem zweiten Empfangssignal der SDC-Block (Informationsblock) übertragen wird. Beim Empfangen des ersten Sendesignals 6 durch die Empfangseinheit 11 kann erkannt werden, wann der SDC-Block im zweiten Sendesignal gesendet wird. Soll ein Wechsel auf die zweite Trägerfrequez vorgenommen werden, ermittelt nun die Wechseleinrichtung, dass die Empfangseinheit 11 sich auf das zweite Sendesignal 9 einstellen soll, um das zweite Sendesignal 9 zu demodulieren und zu dekodieren. Um die Wechselinformation, die vorzusgweise in dem SDC-Block des empfangenen Sendesignals enthalten ist, zu detektieren und auszuwerten, ist eine Detektionseinheit 13 vorgesehen.

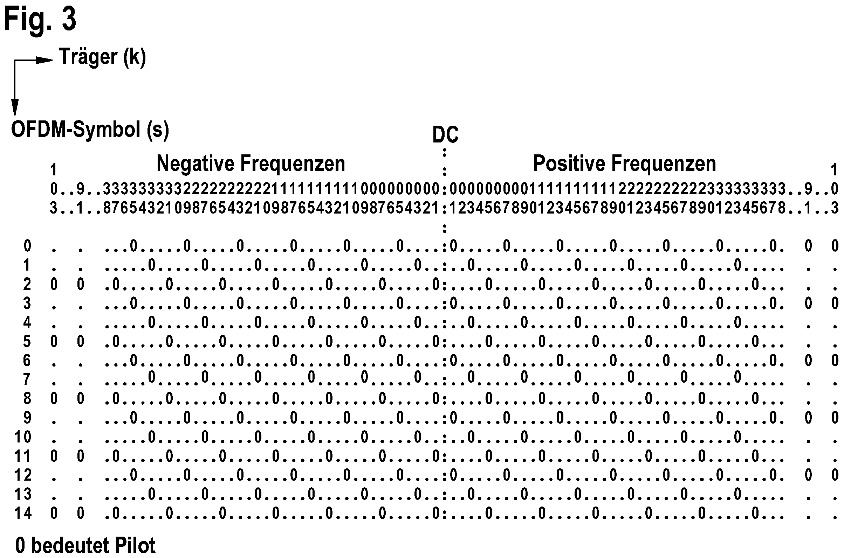

Beim Umschalten des Empfangens zwischen den Sendesignalen besteht die Notwendigkeit, dass eine erneute Kanalschätzung durchgeführt werden muss, um das Sendesignal, auf das umgeschaltet wird, zu demodulieren und zu dekodieren. Die Kanalschätzung wird mit Hilfe einer Kanalschätzeinheit 14 durchgeführt und erfolgt üblicherweise anhand von Pilotsignalen, die in das OFDM-Signal in bestimmten zeitlichen Abständen und Unterfrequenz-Abständen eingebettet werden. Dies ist beispielsweise in Figur 3 anhand der Kreise dargestellt(OFDM-Symbole sind als Punkte dargestellt). Punkte sind Datenzellen, d.h. Unterträger eines OFDM-Symbols mit Nutzdaten. OFDM-Symbole entsprechen also einer Reihe von Kreisen und Punkten in horizontaler Richtung. Eine Verteilung der Pilotsignale in dem OFDM-Sendesignal erfolgt in regelmäßigen Abständen sowohl in zeitlicher Richtung als auch in Richtung der Unterträgerfrequenzen, die jeweils einen festgelegten Frequenzabstand aufweisen. Die Kanalschätzung für die Datenzellen wird durch Interpolation in bekannter Weise ermittelt. Bei der Kanalschätzung wird zuerst in Zeitrichtung interpoliert und anschließend in Frequenzrichtung. Der Abstand der Stützstellen zur Interpolation in Zeitrichtung beträgt im Beispiel 3 Symbole und in der anschließenden Interpolation in Frequenzrichtung 2 Träger.

Beim OFDM-Verfahren muss die Pilotsignaldichte in Frequenz- und in Zeitrichtung beim Systementwurf festgelegt werden. Die Pilotsignaldichte in Frequenzrichtung bestimmt die Anzahl der Pilotsignale innerhalb der Reihe der OFDM-Symbole. Die Pilotsignaldichte in Zeitrichtung bestimmt die Anzahl der Pilotsignale auf einer OFDM-Unterträgerfrequenz. Die Pilotsignaldichte in Frequenzrichtung wird beim Systementwurf abhängig vom zu erwartenden Verzögerungs-, Leitungs- und Dichtespektrum, d.h. abhängig von den Mehrwege-Ausbreitungsbedingungen des Kanals, spezifiziert. Die Pilotsignaldichte in Zeitrichtung wird abhängig vom zu erwartenden Doppler-Leistungsdichtespektrum, d.h. abhängig von der maximalen Dopplerfrequenz des Kanals spezifiziert. Für eine vollständige Kanalschätzung muss eine Interpolation in Zeit- und Frequenzrichtung durchgeführt werden. Die Kanalschätzung ist Grundlage, um die Demodulation der Sendesignale in der Empfangseinrichtung durchführen zu können.

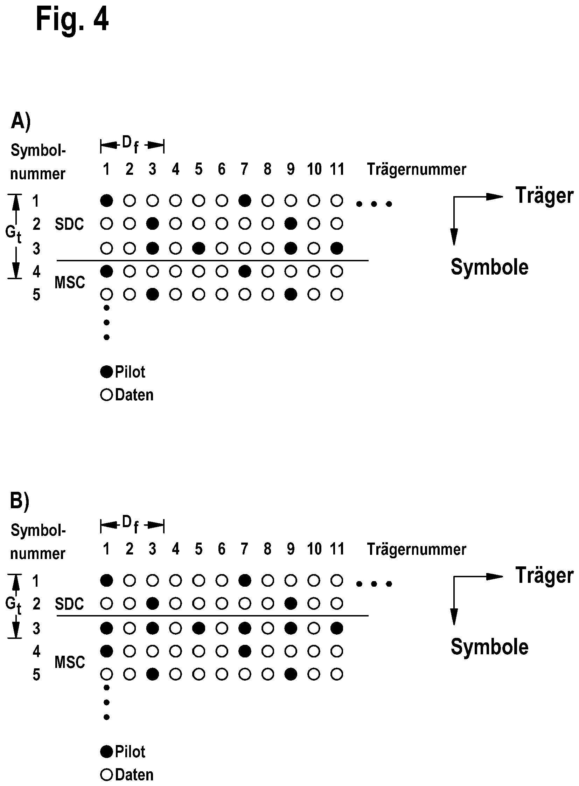

Das Umschalten auf den Empfang eines anderen Sendesignals auf eine verschiedene Trägerfrequenz kann dazu führen, dass das erste OFDM-Symbol in dem SDC-Block nicht erkannt wird, so dass auch keine Interpolation beim Empfangen des darauffolgenden OFDM-Symbols durchgeführt werden kann. Dazu wird, wie in den Figuren 4A und 4B dargestellt ist, vorgeschlagen, eine größere Pilotsignaldichte für die Symbole innerhalb des SDC-Blocks und/oder in den ersten MSC-Symbolen vorzusehen. In Figur 4A ist ein SDC-Block mit drei aufeinanderfolgenden Symbolreihen dargestellt, bei denen weitere Pilotsignale eingefügt sind. Bei den Figuren 4A und 4B sind Pilotsignale als ausgefüllte Kreise und Datenzellen als einfache Kreise dargestellt.

Aus den Figuren 4A und 4B wird ersichtlich, dass bei dem verwendeten diagonalen Pilotsignalmuster Xₜ = Gₜ + D_{f}+1 (Gₜ: Abstand der Pilotensignale in Zeitrichtung; D_{f}: Abstand der Pilotsignale in Frequenzrichtung) OFDM-Symbole notwendig sind, um eine vollständige Kanalschätzung zu erreichen. Am Beispiel der Figuren 4A und 4B ergibt sich Xₜ = 6.

Es wird vorgeschlagen, zusätzliche Pilotsignale in einzelnen OFDM-Symbole zu verwenden. Das Ziel ist, innerhalb kurzer Zeit, d.h. mit weniger OFDM-Symbolen, eine vollständige Kanalschätzung zu erreichen. Bei der Umschaltung auf eine alternative (höhere) Trägerfrequenz wird in den Beispielen der Figuren 4A und 4B davon ausgegangen, dass das OFDM-Symbol Nr. 3 das erste zu empfangende Symbol ist. Die ersten beiden Symbole können aufgrund unterschiedlicher Laufzeiten der Signale der Trägerfrequenz des ersten Sendesignals und der Trägerfrequenz des zweiten Sendesignals nicht dekodiert werden. Zusätzlich benötigt die in der Empfangseinrichtung vorgesehene PLL (Phase Locked Loop) eine gewisse Zeit für die Frequenzumstellung. Bei der Pilotverteilung der Figur 4A werden nur fünf, bei der Pilotverteilung der Figur 4B nur vier OFDM-Symbole benötigt, um einen vollständige Kanalschätzung zu erreichen, wenn jeweils das Symbol N_{START} = 3 das erste zu empfangende Symbol ist. Die zusätzlichen Piloten werden gemäß einer der folgenden Regeln hinzugefügt:
- Es werden dem letzten OFDM-Symbol im SDC-Block (in diesem Fall Symbol Nr. 3) auf jedem Gₜ-Unterträger (in diesem Fall G_{f}=2), welcher im OFDM-Symbol Nₛₜₐᵣₜ (in diesem Fall Symbol Nr. 3) oder Nₛₜₐᵣₜ+1(in diesem Fall Symbol Nr. 4) keine Piloten aufweist, zusätzliche Piloten zugefügt. Die zusätzlichen Piloten werden im Beispiel also im OFDM-Symbol Nr.3 auf jedem G_{f}*Dₜ-Unterträger (in diesem Fall auf den Unterträgern Nr. 3,9,15,...) hinzugefügt.
- Es werden dem ersten OFDM-Symbol des MSC (in diesem Fall Symbol Nr. 4) auf jedem G_{f}-Unterträger (in diesem Fall G_{f}=2) welcher im OFDM-Symbol Nₛₜₐᵣₜ (in diesem Fall Symbol Nr. 3) keine Piloten aufweist zusätzliche Piloten zugefügt. Die zusätzlichen Piloten werden im Beispiel also im OFDM-Symbol Nr.4 hinzugefügt (in diesem Fall auf den Unterträgem Nr. 1,3,7,9,...).

Auf diese Weise wird sichergestellt, dass die Kanalschätzung schnellstmöglich nach dem Umschalten auf die alternative Trägerfrequenz vorgenommen werden kann.

Allgemein sind auf einigen Unterträgem des ersten zu dekodierenden Symbols des weiteren Sendesignals zusätzliche Piloten eingefügt. Dies ist sowohl beim Umschalten auf das Sendesignal der alternativen Trägerfrequenz als auch beim Zurückschalten auf das Sendesignal der ursprünglichen Trägerfrequenz notwendig. Die zusätzlichen Pilotsignale müssen so verteilt sein, dass keine Datenzelle auf einer Unterträgerfrequenz gesendet wird, bevor nicht ein Pilotsignal so empfangen wurde, dass zumindest die Unterträgerfrequenz durch Interpolation ermittelbar ist.

Der Empfangseinrichtung 3 muss das geänderte Pilotsignalmuster bekannt sein. Vorzugsweise sind zusätzliche Interpolationsfilter in der Empfangseinrichtung 3 vorgesehen, um das empfangene Sendesignal in Zeitrichtung zu interpolieren. Beim dargestellten Beispiel ist Dₜ = 3. Bei Abbildung **4A** und **4B** ergeben sich aber auf manchen Trägern Pilotabstände von Dₜ = 2.

## Patentansprüche

1. Verfahren zum Übertragen eines Datenstromes in einem digitalen Übertragungssystem, wobei der Datenstrom in einem Sendesignal mit aufeinanderfolgenden OFDM-Symbolen übertragen wird,
wobei eine Anzahl von OFDM-Symbolen in einem Übertragungsrahmen zusammengefasst sind, wobei eine Anzahl von Übertragungsrahmen in einem Übertragungs-Superrahmen übertragen werden,
wobei jeder Übertragungs-Superrahmen einen Informationsblock mit einem oder mehreren OFDM-Symbolen an einer festgelegten Position des Übertragungs-Superrahmen aufweist,
wobei ein erstes Sendesignal (6) mit einem ersten Datenstrom in einem ersten Trägerfrequenzbereich und ein zweites Sendesignal (9) mit einem zweiten Datenstrom mit gleichem Informationsgehalt wie der erste Datenstrom in einem zweiten Trägerfrequenzbereiches übertragen werden,
wobei die Zeitdauer der Übertragungs-Superrahmen des ersten Sendesignals (6) ein ganzzahliges Vielfaches der Zeitdauer der Übertragungs-Superrahmen des zweiten Sendesignals (9) ist, wobei der Informationsblock in den Übertragungs-Superrahmen des ersten Sendesignals (6) zumindest teilweise zeitlich überlappend mit einem der Informationsblöcke des Übertragungs-Superrahmens des zweiten Sendesignals (9) gesendet wird.

2. Verfahren nach Anspruch 1, wobei der Informationsblock in den Übertragungs-Superrahmen des ersten Sendesignals (6) zeitgleich mit einem der Informationsblöcke des Übertragungs-Superrahmens des zweiten Sendesignals (9) gesendet wird.

3. Verfahren nach Anspruch 1 oder 2, wobei die Zeitdauer der Übertragungsrahmen des ersten Sendesignals ein weiteres ganzzahliges Vielfaches der Zeitdauer der Übertragungsrahmen des zweiten Sendesignals ist.

4. Verfahren nach einem der Ansprüche 1 bis 3, wobei jedem Informationsblock der Übertragungs-Superrahmen des zweiten Sendesignals (9) eine Wechselinformation hinzugefügt wird, wobei die Wechselinformation angibt, bei welchen Informationsblöcken des zweiten Sendesignals (9) ein Informationsblock des ersten Sendesignals (6) zeitlich überlappend gesendet wird.

5. Verfahren nach einem der Ansprüche 1 bis 4, wobei die zweite Trägerfrequenz höher ist als die erste Trägerfrequenz, wobei zur Unterstützung einer Kanalschätzung in den Übertragungs-Superrahmen des ersten und des zweiten Sendesignals (6,9) Pilotsignale vorgesehen werden, wobei zur Durchführung der Kanalschätzung bestimmte Dichten der Pilotsignale in den zweiten Sendesignalen (6, 9) in den Übertragungs-Superrahmen abhängig von Kanaleigenschaften der Sendesignale notwendig sind, wobei die Dichte der Pilotsignale der zweiten Sendesignale gegenüber der bestimmten Dichte des Pilotsignals des zweiten Sendesignals erhöht gewählt wird.

6. Verfahren zum Wechseln des Empfangens zwischen zwei Empfangssignalen, wobei die Empfangssignale OFDM-Symbole umfassen, wobei eine Anzahl von OFDM-Symbolen in einem Übertragungsrahmen zusammengefasst sind, wobei eine Anzahl von Übertragungsrahmen in einem Übertragungs-Superrahmen übertragen werden,
wobei jeder Übertragungs-Superrahmen einen Informationsblock mit einem oder mehreren OFDM-Symbolen an einer festgelegten Position des Übertragungs-Superrahmen aufweist,
wobei zwischen dem Empfangen eines ersten der Empfangssignale (6) und des Empfangens eines zweiten der Empfangssignale (9) während eines Zeitbereichs gewechselt wird, in dem sowohl in dem ersten als auch in dem zweiten Empfangssignal (9) der Informationsblock übertragen wird.

7. Verfahren nach Anspruch 6, wobei in den Informationsblöcken des zweiten Empfangssignals (9) eine Wechselinformation empfangen wird, die angibt, zu welchen Informationsblöcken des zweiten Übertragungs-Superrahmens der Informationsblock des ersten Übertragungs-Superrahmens zeitgleich gesendet wird.

8. Verfahren nach Anspruch 6 oder 7, wobei unmittelbar nach dem Wechsel zwischen den Empfangssignalen (6,9) eine Kanalschätzung mit Hilfe von in dem ersten und in dem zweiten Empfangssignal (6,9) vorgesehenen Informationsblöcken enthaltenen Pilotsignalen durchgeführt wird.

9. Empfangseinrichtung (3) in einem digitalen Übertragungssystem zum Empfangen eines Empfangssignals, umfassend:
- eine Empfangseinheit (11) zum Empfangen wahlweise eines ersten Empfangssignals (6) in einem ersten Trägerfrequenzbereich und eines zweiten Empfangssignals (9) in einem zweiten Trägerfrequenzbereich, wobei die Empfangssignale (6,9) OFDM-Symbole umfassen, wobei jeweils eine Anzahl von OFDM-Symbolen in einem Übertragungsrahmen zusammengefasst sind, wobei eine Anzahl von Übertragungsrahmen in einem Übertragungs-Superrahmen enthalten sind, wobei jeder Übertragungs-Superrahmen einen Informationsblock mit einem oder mehreren OFDM-Symbolen an einer festgelegten Position des Übertragungs-Superrahmen aufweist,
- eine Wechseleinrichtung (12) zum Durchführen eines Wechselns zwischen dem Empfangen des ersten und des zweiten Empfangssignals (6,9), wobei die Wechseleinrichtung (12) gestaltet ist, um den Wechsel zwischen den Empfangssignalen während eines Zeitbereichs durchzuführen, wobei der Zeitbereich dadurch definiert ist, dass sowohl in dem ersten als auch in dem zweiten Empfangssignal (6,9) der Informationsblock übertragen wird.

10. Empfangseinrichtung (3) nach Anspruch 9, mit einer Detektionseinheit (13) zum Auswerten einer in dem Informationsblock des zweiten Empfangssignals (9) enthaltenen Wechselinformation, wobei die Wechselinformation zumindest angibt, bei welchen Informationsblöcken des zweiten Empfangssignals (9) der Informationsblock des ersten Empfangssignals (6) zumindest teilweise überlappend gesendet wird, wobei die Detektionseinheit (13) die Wechseleinrichtung ansteuert, um einen Wechsel zwischen den Empfangssignalen (6,9) durchzuführen, während in beiden Empfangssignalen der Informationsblock übertragen wird.

11. Empfangseinrichtung (3) nach Anspruch 9 oder 10, wobei eine Kanalschätzeinheit vorgesehen ist, um eine Kanalschätzung zumindest mit Hilfe von in dem ersten und in dem zweiten Empfangssignal vorgesehenen Informationsblöcken enthaltenen Pilotsignalen durchzuführen.

12. Sendeeinrichtung (2) zum Übertragen eines Datenstromes in einem digitalen Übertragungssystem, wobei der Datenstrom in einem Sendesignal mit aufeinanderfolgenden OFDM-Symbolen übertragen werden, wobei jeweils eine Anzahl von OFDM-Symbolen in einem Übertragungsrahmen zusammengefasst sind, wobei eine Anzahl von Übertragungsrahmen in einem Übertragungs-Superrahmen zusammengefasst sind, wobei der Übertragungs-Superrahmen einen Informationsblock mit einem oder mehreren OFDM-Symbolen an einer festgelegten Position des Übertragungs-Superrahmen aufweist, umfassend:
eine erste Sendeeinheit (4) zum Übertragen eines ersten Datenstromes in einem ersten Trägerfrequenzbereich;
eine zweite Sendeeinheit (7) zum Übertragen eines zweiten Datenstromes mit gleichem Informationsgehalt wie der erste Datenstrom in einem zweiten Trägerfrequenzbereich, wobei die erste und die zweite Sendeeinheit (4, 7) so aufeinander abgestimmt sind, dass die Zeitdauern der Übertragungs-Superrahmen des ersten Sendesignals (6) auf ein ganzzahliges Vielfaches der Zeitdauer des Übertragungs-Superrahmens des zweiten Sendesignals (9) eingestellt ist; und
eine Synchronisationseinheit (15), um die Übertragungs-Superrahmen des ersten Sendesignals (6) und die Übertragungs-Superrahmen des zweiten Sendesignals (9) so aufeinander anzugleichen, dass sich die Informationsblöcke der Übertragungs-Superrahmen des ersten Sendesignals und mindestens einer der Informationsblöcke der Übertragungs-Superrahmen des zweiten Sendesignals (9) zeitlich überlappen.

13. Sendeeinrichtung (2) nach Anspruch 12, wobei eine Modifizierungseinheit (10) vorgesehen ist, um den Informationsblöcken in dem zweiten Sendesignal (9) eine Wechselinformation hinzuzufügen, die angibt, bei welchen Informationsblöcken des zweiten Sendesignals (9) der Informationsblock des ersten Sendesignals (6) zeitgleich gesendet wird.

14. Sendeeinrichtung (2) nach Anspruch 12 oder 13, wobei eine Pilotsignaleinheit vorgesehen ist, um Pilotsignale zur Durchführung einer Kanalschätzung dem ersten und dem zweiten Sendesignal (6, 9) hinzuzufügen, wobei zur Durchführung der Kanalschätzung bestimmte Dichten der Pilotsignale in den Informationsblöcken der Sendesignale (6, 9) in den Übertragungs-Superrahmen abhängig von Kanaleigenschaften der Sendesignale notwendig sind, wobei die Pilotsignaleinheit so gestaltet ist, um zusätzliche Pilotsignale in das zweite Sendesignal einzufügen.

## Claims

1. Method for transmitting a data stream in a digital transmission system, wherein the data stream is transmitted in a transmission signal having successive OFDM symbols,
wherein a number of OFDM symbols are combined in a transmission frame, wherein a number of transmission frames are transmitted in a transmission superframe, wherein each transmission superframe has an information block having one or more OFDM symbols at a stipulated position in the transmission superframe,
wherein a first transmission signal (6) having a first data stream is transmitted in a first carrier frequency range and a second transmission signal (9) having a second data stream having the same information content as the first data stream is transmitted in a second carrier frequency range,
wherein the duration of the transmission superframes of the first transmission signal (6) is an integer multiple of the duration of the transmission superframes of the second transmission signal (9), wherein the information block in the transmission superframes of the first transmission signal (6) is sent with an at least partial temporal overlap with one of the information blocks of the transmission superframe of the second transmission signal (9).

2. Method according to Claim 1, wherein the information block in the transmission superframes of the first transmission signal (6) is sent at the same time as one of the information blocks of the transmission superframe of the second transmission signal (9).

3. Method according to Claim 1 or 2, wherein the duration of the transmission frames of the first transmission signal is a further integer multiple of the duration of the transmission frames of the second transmission signal.

4. Method according to one of Claims 1 to 3, wherein each information block of the transmission superframes of the second transmission signal (9) has a piece of alternation information added to it, wherein the alternation information indicates those information blocks of the second transmission signal (9) for which an information block of the first transmission signal (6) is sent with a temporal overlap.

5. Method according to one of Claims 1 to 4, wherein the second carrier frequency is higher than the first carrier frequency, wherein a channel estimate in the transmission superframes of the first and second transmission signals (6, 9) is supported by virtue of pilot signals being provided, wherein performance of the channel estimate requires particular densities of the pilot signals in the second transmission signals (6, 9) in the transmission superframes on the basis of channel properties of the transmission signals, the density of the pilot signals of the second transmission signals being chosen to be elevated in comparison with the particular density of the pilot signal of the second transmission signal.

6. Method for alternating reception between two received signals, wherein the received signals comprise OFDM symbols, wherein a number of OFDM symbols are combined in a transmission frame, wherein a number of transmission frames are transmitted in a transmission superframe, wherein each transmission superframe has an information block having one or more OFDM symbols at a stipulated position in the transmission superframe, wherein alternation between reception of a first of the received signals (6) and reception of a second of the received signals (9) takes place during a time range in which transmission takes place both in the first and in the second received signal (9) of the information block.

7. Method according to Claim 6, wherein a piece of alternation information is received in the information blocks of the second received signal (9), indicating those information blocks of the second transmission superframe for which the information block of the first transmission superframe is sent at the same time.

8. Method according to Claim 6 or 7, wherein immediately after the alternation between the received signals (6, 9) a channel estimate is performed using pilot signals contained information blocks provided in the first and in the second received signal (6, 9).

9. Reception device (3) in a digital transmission system for receiving a received signal, comprising:
- a reception unit (11) for receiving either a first received signal (6) in a first carrier frequency range or a second received signal (9) in a second carrier frequency range, wherein the received signals (6, 9) comprise OFDM symbols, wherein a respective number of OFDM symbols are combined in a transmission frame, wherein a number of transmission frames are contained in a transmission superframe, wherein each transmission superframe has an information block having one or more OFDM symbols at a stipulated position in the transmission superframe,
- an alternation device (12) for performing an alternation between the receiving of the first and the second received signal (6, 9), wherein the alternation device (12) is designed to perform the alternation between the received signals during a time range, the time range being defined in that transmission takes place both in the first and in the second received signal (6, 9) of the information block.

10. Reception device (3) according to Claim 9, having a detection unit (13) for evaluating a piece of alternation information contained in the information block of the second received signal (9), wherein the alternation information at least indicates those information blocks of the second received signal (9) for which the information block of the first received signal (6) is sent with an at least partial overlap, wherein the detection unit (13) actuates the alternation device in order to perform an alternation between the received signals (6, 9) while transmission takes place in both received signals of the information block.

11. Reception device (3) according to Claim 9 or 10, wherein a channel estimation unit is provided in order to perform a channel estimate at least using pilot signals contained information blocks provided in the first and in the second received signal.

12. Transmission device (2) for transmitting a data stream in a digital transmission system, wherein the data stream are transmitted in a transmission signal having successive OFDM symbols, wherein a respective number of OFDM symbols are combined in a transmission frame, wherein a number of transmission frames are combined in a transmission superframe, wherein the transmission superframe has an information block having one or more OFDM symbols at a stipulated position in the transmission superframe, comprising:
a first transmission unit (4) for transmitting a first data stream in a first carrier frequency range;
a second transmission unit (7) for transmitting a second data stream having the same information content as the first data stream in a second carrier frequency range, wherein the first and second transmission units (4, 7) are attuned to one another such that the durations of the transmission superframes of the first transmission signal (6) is set to an integer multiple of the duration of the transmission superframe of the second transmission signal (9); and
a synchronization unit (15) in order to align the transmission superframes of the first transmission signal (6) and the transmission superframes of the second transmission signal (9) with one another such that the information blocks of the transmission superframes of the first transmission signal and at least one of the information blocks of the transmission superframes of the second transmission signal (9) have a temporal overlap.

13. Transmission device (2) according to Claim 12, wherein a modification unit (10) is provided in order to add to the information blocks in the second transmission signal (9) a piece of alternation information indicating those information blocks of the second transmission signal (9) for which the information block of the first transmission signal (6) is sent at the same time.

14. Transmission device (2) according to Claim 12 or 13, wherein a pilot signal unit is provided in order to add pilot signals for performing a channel estimate to the first and second transmission signals (6, 9), wherein performing the channel estimate requires particular densities of the pilot signals in the information blocks of the transmission signals (6, 9) in the transmission superframes on the basis of channel properties of the transmission signals, wherein the pilot signal unit is designed to insert additional pilot signals into the second transmission signal.

## Revendications

1. Procédé de transmission d'un flux de données dans un système de transmission numérique, dans lequel le flux de données est transmis dans un signal d'émission comportant des symboles OFDM consécutifs,
dans lequel un certain nombre de symboles OFDM sont combinés dans une trame de transmission, dans lequel un certain nombre de trames de transmission sont transmises dans une supertrame de transmission,
dans lequel chaque supertrame de transmission comporte un bloc d'informations contenant un ou plusieurs symboles OFDM à une position fixe de la supertrame de transmission,
dans lequel un premier signal d'émission (6) contenant un premier flux de données dans une première plage de fréquences porteuses et un deuxième signal d'émission (9) contenant un deuxième flux de données ayant le même contenu en informations que le premier flux de données sont transmis dans une deuxième plage de fréquences porteuses,
dans lequel la durée de la supertrame de transmission du premier signal d'émission (6) est un multiple entier de la durée de la supertrame de transmission du deuxième signal d'émission (9), dans lequel le bloc d'informations est émis dans la supertrame de transmission du premier signal d'émission (6) de manière à chevaucher au moins partiellement dans le temps l'un des blocs d'informations de la supertrame de transmission du deuxième signal d'émission (9).

2. Procédé selon la revendication 1, dans lequel le bloc d'informations contenu dans la supertrame de transmission du premier signal d'émission (9) est émis en même temps que l'un des blocs d'informations de la supertrame de transmission du deuxième signal d'émission (9).

3. Procédé selon la revendication 1 ou 2, dans lequel la durée de la supertrame de transmission du premier signal d'émission est égale à un autre multiple entier de la durée de la supertrame de transmission du deuxième signal d'émission.

4. Procédé selon l'une des revendications 1 à 3, dans lequel une information de basculement est ajoutée à chaque bloc d'informations de la supertrame de transmission du deuxième signal d'émission (9), dans lequel l'information de basculement indique pour quels blocs d'informations du deuxième signal d'émission (9) un bloc d'informations du premier signal d'émission (6) est émis de manière à chevaucher ceux-ci dans le temps.

5. Procédé selon l'une des revendications 1 à 4, dans lequel la deuxième fréquence porteuse est supérieure à la première fréquence porteuse, dans lequel des signaux pilotes sont prévus pour aider à l'estimation de canal dans la supertrame de transmission des premier et deuxième signaux d'émission (6, 9), dans lequel des densités déterminées des signaux pilotes dans les deuxièmes signaux d'émission (6, 9) de la supertrame de transmission sont nécessaires pour effectuer l'estimation de canal, en fonction des caractéristiques de canal des signaux d'émission, dans lequel la densité des signaux pilotes des deuxièmes signaux d'émission par rapport à la densité déterminée des signaux pilotes du deuxième signal d'émission est sélectionnée de manière à ce qu'elle soit plus élevée.

6. Procédé de basculement de la réception entre deux signaux de réception, dans lequel les signaux de réception comprennent des symboles OFDM, dans lequel un certain nombre de symboles OFDM sont combinés dans une trame de transmission, dans lequel un certain nombre de trames de transmission sont transmises dans une supertrame de transmission, dans lequel chaque supertrame de transmission comporte un bloc d'informations contenant un ou plusieurs symboles OFDM à une position fixe de la supertrame de transmission, dans lequel un basculement est effectué entre la réception d'un premier des signaux de réception (6) et la réception d'un deuxième des signaux de réception (9) pendant un intervalle de temps au cours duquel le bloc d'informations est transmis à la fois dans les premier et second signaux reçus (9).

7. Procédé selon la revendication 6, dans lequel une information de basculement est reçue dans les blocs d'informations du deuxième signal de réception (9), laquelle information indique les blocs d'informations de la deuxième supertrame de transmission en même temps que lesquels le bloc d'information de la première supertrame de transmission est émis.

8. Procédé selon la revendication 6 ou 7, dans lequel une estimation de canal est effectuée immédiatement après le basculement entre les signaux de réception (6, 9) à l'aide de signaux pilotes contenus des blocs d'informations prévus dans les premier et deuxième signaux de réception (6, 9)

9. Dispositif de réception (3) dans un système de transmission numérique, destiné à recevoir un signal de réception, comprenant :
- une unité de réception (11) destinée à recevoir sélectivement un premier signal de réception (6) dans une première plage de fréquences porteuses et un deuxième signal de réception (9) dans une deuxième plage de fréquences porteuses, dans lequel les signaux de réception (6, 9) comprennent des symboles OFDM, dans lequel un certain nombre de symboles OFDM sont respectivement combinés dans une trame de transmission, dans lequel un certain nombre de trames de transmission sont contenues dans une supertrame de transmission, dans lequel chaque supertrame de transmission comporte un bloc d'informations contenant un ou plusieurs symboles OFDM à une position fixe de la supertrame de transmission,
- un dispositif de basculement (12) destiné à effectuer un basculement entre la réception des premier et deuxième signaux de réception (6, 9), dans lequel le dispositif de basculement (12) est conçu pour effectuer le basculement entre les signaux de réception au cours d'un intervalle de temps, dans lequel l'intervalle de temps est défini par le fait que le bloc d'informations est transmis à la fois dans les premier et deuxième signaux de réception (6, 9).

10. Dispositif de réception (3) selon la revendication 9, comportant une unité de détection (13) destinée à évaluer une information de basculement contenue dans le bloc d'informations du deuxième signal de réception (9), dans lequel l'information de basculement indique au moins les blocs d'informations du deuxième signal de réception (9) pour lesquels le bloc d'informations du premier signal de réception (6) est émis de manière à chevaucher ceux-ci au moins partiellement, dans lequel l'unité de détection (13) commande le dispositif de basculement afin d'effectuer un basculement entre les signaux de réception (6, 9) pendant que le bloc d'informations est transmis dans les deux signaux de réception.

11. Dispositif de réception (3) selon la revendication 9 ou 10, dans lequel il est prévu une unité d'estimation de canal destinée à effectuer une estimation de canal au moins à l'aide de signaux pilotes contenus des blocs d'informations prévus dans les premier et deuxième signaux de réception.

12. Dispositif d'émission (2) destiné à transmettre un flux de données dans un système de transmission numérique, dans lequel le flux de données sout transmis dans un signal d'émission comportant des symboles OFDM consécutifs, dans lequel un certain nombre de symboles OFDM sont respectivement combinés dans une trame de transmission, dans lequel un certain nombre de trames de transmission sont combinées dans une supertrame de transmission, dans lequel la supertrame de transmission comporte un bloc d'informations contenant un ou plusieurs symboles OFDM à une position fixe de la supertrame de transmission, comprenant :
une première unité d'émission (4) destinée à transmettre un premier flux de données dans une première plage de fréquences porteuses ;
une deuxième unité d'émission (7) destinée à transmettre un deuxième flux de données ayant le même contenu d'informations que le premier flux de données dans une deuxième plage de fréquences porteuses, dans lequel les première et deuxième unités d'émission (4, 7) sont adaptées l'une à l'autre de manière à ce que les durées de la supertrame de transmission du premier signal d'émission (6) soi réglée à un multiple entier de la durée de la supertrame de transmission du deuxième signal d'émission (9) ; et
une unité de synchronisation (15) destinée à ajuster la supertrame de transmission du premier signal d'émission (6) et la supertrame de transmission du deuxième signal d'émission (9) l'une par rapport à l'autre de manière à ce que les blocs d'informations de la supertrame de transmission du premier signal d'émission et au moins l'un des blocs d'informations de la supertrame de transmission du deuxième signal d'émission (9) se chevauchent dans le temps.

13. Dispositif d'émission (2) selon la revendication 12, dans lequel il est prévu une unité de modification (10) destinée à introduire une information de basculement dans les blocs d'informations contenus dans le deuxième signal d'émission (9), qui indique pour quels blocs d'informations du deuxième signal d'émission (9) le bloc d'information du premier signal (6) est émis simultanément.

14. Dispositif d'émission (2) selon la revendication 12 ou 13, dans lequel il est prévu une unité génératrice de signaux pilotes pour introduire dans les premier et deuxième signaux d'émission (6, 9) des signaux pilotes permettant d'effectuer une estimation de canal, dans lequel des densités déterminées des signaux pilotes dans les blocs d'informations des signaux d'émission (6, 9) dans les supertrames de transmission sont nécessaires pour effectuer l'estimation de canal en fonction de propriétés de canal des signaux d'émission, dans lequel l'unité génératrice de signaux pilotes est conçue pour introduire des signaux pilotes supplémentaires dans le deuxième signal d'émission.
